# EUROPEAN PATENT APPLICATION

(11) **EP 1 255 210 A1**
(43) Date of publication of application: **06.11.2002**
(21) Application number: 00951909.1
(22) Date of filing: 09.08.2000
(51) Int. Cl.: G06F 17/60

(54) **CUSTOMER COLLATION SYSTEM, CARD, MOBILE COMMUNICATION TERMINAL, AND SHOP SYSTEM**

(30) Priority: 09.08.1999 JP 22487899; 09.09.1999 JP 25501599; 07.10.1999 JP 28623599
(71) Applicant: Yozan Inc., Tokyo 155-0031 (JP)
(72) Inventor: Takatori, Sunao, Tokyo 155-0031 (JP)
(74) Representative: Grünecker, Kinkeldey, Stockmair & Schwanhäusser Anwaltssozietät
(86) International application number: JP0005327
(87) International publication number: WO01011510

(57) **Abstract**

An object of the present invention is to provide a customer collation system, a card, a mobile communication terminal and a shop system in order to prevent a card such as a credit card and a cash card or the like from being "fraudulently used" to promote safety of a credit account and a prepaid account.

A plurality of card readers (T1 to Tn) for reading the data of a card (CD) are arranged in a shop and these card readers (T1 to Tn) are connected to a customer collation center (CS). The customer collation center (CS) is mutually connected to card issuers (C1 to CN) and the data read by the card readers (T1 to Tn) is collated with the data of the usage year, month, data, hour, minute of the card (CD) of the recent ten times of an issuer of the card (CD) (for example, C1). Hereby, it is possible to prevent "the fraudulent usage of a card".

## Description

### Technical Field

The present invention relates to a customer collation system, a card, a mobile communication terminal and a shop system for a credit account and a prepaid account by the use of a credit card, a cash card and a mobile communication terminal or the like.

### Background Art

Damage by "the fraudulent usage of a credit card" is serious. Particularly, it occurs in many cases that statements about the usage of the credit card of Japanese overseas travelers are illegally copied. Further, as soon as the international usage of a cashing service becomes available in accordance with deregulation of finance in recent years, some cases of "the fraudulent usage of a credit card" of a cash service, so called debit card, have taken place.

The present invention has been made by taking such problems into consideration, and an object of which is to provide a customer collation system, a card, a mobile communication terminal and a shop system in order to prevent a card such as a credit card and a cash card or the like from being "fraudulently used" to promote safety of a credit account and a prepaid account.

### Disclosure of the Invention

The present invention is related to a customer collation system comprising storage means for storing the usage condition data resulting from the usage condition of a card of a customer and collation means for collating the usage condition data from the shop with the usage condition data, which is stored in the storage means and thereby, it is possible to prevent "the fraudulent usage of a card".

The card is preferably a credit card and the usage condition data is preferably the purchase data of the recent predetermined times. Hereby, it is possible to prevent "the fraudulent usage of a credit card".

The card is preferably a cash card and the usage condition data is preferably the account data of the recent predetermined times. Hereby, it is possible to prevent "the fraudulent usage of a cash card".

Alternatively, the present invention is related to a card provided with storage means for storing the usage condition data resulting from the usage condition. Hereby, it is possible to prevent "the fraudulent usage of a card".

The card is preferably a credit card and the usage condition data is preferably the purchase data of the recent predetermined times. Hereby, it is possible to prevent "the fraudulent usage of a credit card".

The card is preferably a cash card and the usage condition data is preferably the account data of the recent predetermined times. Hereby, it is possible to prevent "the fraudulent usage of a cash card".

The present invention is related to a customer collation system comprising storage means for storing the account condition data resulting from the account condition of a mobile communication terminal of a customer and collation means for collating the account condition data from the mobile communication terminal with the account condition data, which is stored in the storage means and thereby, it is possible to prevent "the fraudulent usage of a card".

Preferably, the account condition data comprises the credit account data or the prepaid account data of the recent predetermined times. Hereby, to obtain the data illegally becomes difficult.

Preferably, the customer collation system is provided with transmission means for transmitting the pseudo data of the account to the mobile communication terminal when the account has not been performed during a given period. The storage means stores the pseudo data of the account as the account condition data. Hereby, even when the small amount of the account is opened, it is possible to prevent "the fraudulent usage of a card".

Alternatively, the present invention is related to a mobile communication terminal, which is provided with storage means for storing the account condition data resulting from the account condition upon performing a transaction. Hereby, it is possible to prevent "the fraudulent usage of a card".

Preferably, the storage means stores an account stop personal identification code for stopping an account. Further, controlling means is provided to input the account stop personal identification code through the communication and thereby, stop an account by the mobile communication terminal. Hereby, the account by the mobile communication terminal is stopped.

Alternatively, the present invention is related to a shop system which is capable of being detachably connected to a mobile communication terminal of a customer and is capable of connecting detachable storage means for storing a customer specific code and the account condition data resulting from the account condition upon performing a transaction by the mobile communication terminal, and said shop system is provided with reading means for reading out the code and the account condition data from this detachable storage means and for transmitting it to a dealer and receiving means for receiving the information with regard to whether the account exists or not from the dealer. Hereby, it is possible to prevent "the fraudulent usage of a card".

Preferably, the detachable storage means is a SIM card. Hereby, it is possible to apply a standard SIM card to customer collating means.

Alternatively, the present invention is related to a mobile communication terminal detachably connecting the detachable storage means for storing a customer specific code and the account condition data resulting from the account condition upon performing a transaction by the mobile communication terminal. Hereby, it is possible to prevent "the fraudulent usage of a card".

Preferably, the detachable storage means stores the account stop personal identification code for stopping an account and the detachable storage means is provided with controlling means for stopping the account due to the mobile communication terminal by inputting the account stop personal identification code through the communication. Hereby, the account by the mobile communication terminal is stopped.

### Brief Description of the Drawings

FIG. 1 is a block diagram for illustrating a first embodiment of a customer collation system according to the present invention.
FIG. 2 is a block diagram for illustrating a second embodiment of a customer collation system according to the present invention.
FIG. 3 is a flow chart for illustrating the processing for writing the dummy data according to the second embodiment.
FIG. 4 is a flow chart for illustrating the processing for inquiry according to the second embodiment.
FIG. 5 is a flow chart for illustrating the processing for stopping an account by compulsion according to the second embodiment.
FIG. 6 is a block diagram for illustrating a third embodiment of a customer collation system according to the present invention.

### Best Mode for Carrying out the Invention

In the next place, a first embodiment of a customer collation system according to the present invention will be explained with reference to the drawing.

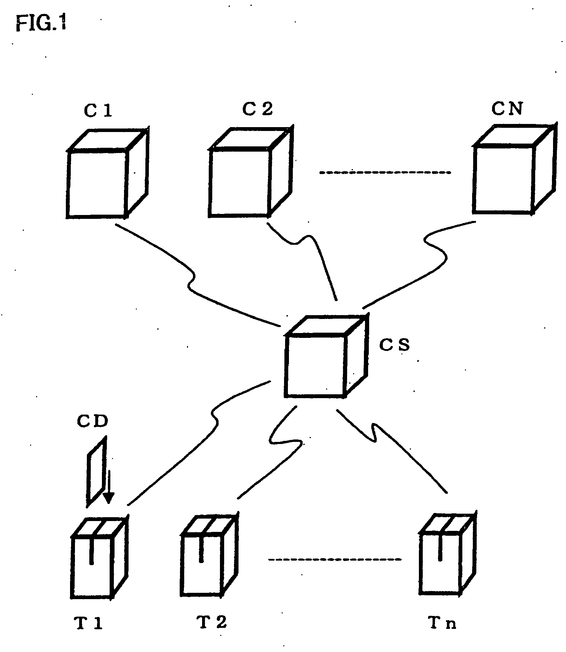

In the customer collation system shown FIG. 1, a plurality of card readers T1 to Tn for reading the data of a card CD are arranged in a shop and are connected to a customer collation center CS. The customer collation center CS is mutually connected to card issuers C1 to CN and the data read by the card readers T1 to Tn is collated with the information of an issuer of the card CD (for example, C1).

The card readers T1 to Tn and the customer collation center CS as well as the customer collation center CS and the card issuers C1 to CN are connected through a public telephone network of a fixed telephone or a mobile telephone or through a dedicated line.

The card CD is a card having storage means such as a memory card or the like. In the card CD, collation codes shown in a table 1 and a table 2 are held in addition to a customer number, a personal identification code, an effective period, a limited amount of the usage and other fixed data on the basis of a contract between the card issuer and a customer. The table 1 generates a collation code by a function f () from a value for the minute in the data of the usage year, month, date, hour, minute of a card of the recent ten times. The table 2 generates a collation code by a function g () from a shop number in which a card has been used in the recent ten times.

**Table 1 :**

| Collation code | | | | | |
|---|---|---|---|---|---|
| Year | month | date | hour | minute | collation code |
| Yₖ | Mₖ | Dₖ | Hₖ | mₖ | f(mₖ₋₁₀, ..., mₖ₋₁ ) |
| Yₖ₊₁ | Mₖ₊₁ | Dₖ₊₁ | Hₖ₊₁ | mₖ₊₁ | f(mₖ₋₉, ..., mₖ) |
| Yₖ₊₂ | Mₖ₊₂ | Dₖ₊₂ | Hₖ₊₂ | mₖ₊₂ | f(mₖ₋₈, ..., mₖ₊₁) |
| ...... | ...... | ...... | ...... | ...... | ............... |
| Yₙ | Mₙ | Dₙ | Hₙ | mₙ | f(mₙ₋₁₀, ..., m_{n- 1}) |

**Table 2 :**

| Collation code | | |
|---|---|---|
| shop number | amount of the usage | collation code |
| RSNₖ | MMₖ | g(RSNₖ₋₁₀, ..., RSNₖ₋₁) |
| RSNₖ₊₁ | MMₖ₊₁ | g(RSNₖ₋₉, ..., RSNₖ) |
| RSNₖ₊₂ | MMₖ₊₂ | g(RSNₖ₋₈, ..., RSNₖ₊₁) |
| .............. | .............. | .............. |
| RSNₙ | MMₙ | g(RSNₙ₋₁₀, ..., RSNₙ₋₁) |

As the function f () and the function g (), a function or the like for generating a numerical value row is used in which all digits of an inputted numerical value (a minute or a shop number) or a portion thereof is sequentially arranged. Alternatively, as an inputted numerical value, the data other than a minute in the table 1, i.e., a date and an hour may be used. Other data in table 2 which varies frequently, i.e., the amount of the usage or the like may be used.

For example, even if the statements about the usage of the credit card is illegally copied, it is not possible to know the record of the usage and the year, month, date, hour and minute of the usage or the like before that, much less to know the usage condition after that. Accordingly, unless the card CD itself is illegally used, "the fraudulent usage of a card" is not possible. In other words, if variable data to be determined by the usage condition of the card is used as a collation code, the damage due to "the fraudulent usage of a card" is extremely reduced. In the above described embodiment, the collation code is collated in the customer collation center CS. However, it is a matter of course that the reading result of the card reader may be directly transmitted to the card issuer so that the reading result may be collated by the card issuer.

In the next place, a second embodiment of a customer collation system according to the present invention will be explained with reference to the drawings.

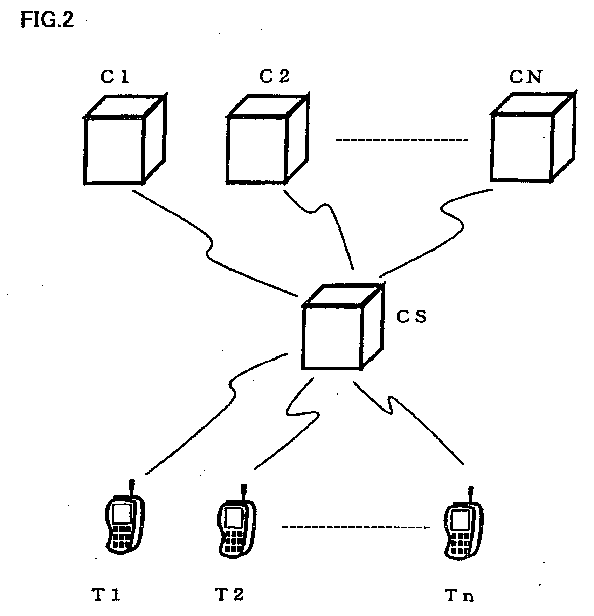

In FIG. 2, the customer collation system has a plurality of the mobile communication terminals T1 to Tn such as a mobile telephone, a PHS, a pager and others. These mobile communication terminals are capable of communicating with the dealers C1 to CN through the mobile communication service company CS.

The mobile communication terminals T1 to Tn have the storage means such as a memory or the like and hold the collation codes shown in the table 1 and the table 2 in addition to a customer number, a personal identification code, an effective period, a limited amount of the usage and other fixed data on the basis of a contract between the card issuer and a customer.

For example, even if the statements about the usage of the credit card is illegally copied, it is not possible to know the record of the usage and the year, month, date, hour and minute of the usage or the like before that, much less to know the usage condition after that. Accordingly, unless the mobile communication terminal itself is illegally used, "the fraudulent usage of a card" is not possible. In other words, if variable data to be determined by the usage condition of the mobile communication terminal is used as a collation code, the damage due to "the fraudulent usage of a card" is extremely reduced.

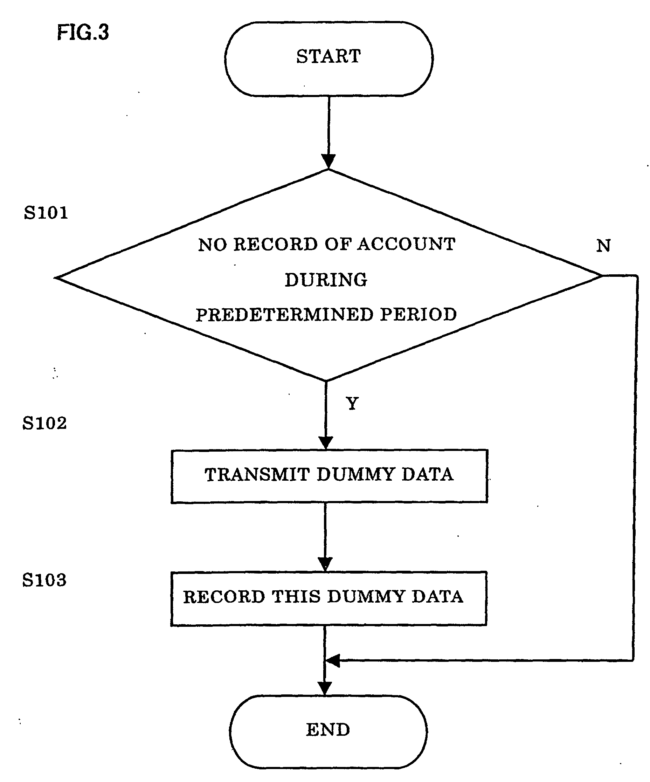

However, the data in association with such an account condition is not generated unless the account is really carried out. Such data cannot be effective for a customer who carries out the account in low frequency. Therefore, as shown in a flow chart of FIG. 3, the dummy data of the account is generated.

In FIG. 3, if the dealer regularly checks the account condition of respective customers and finds a customer having no record of the account during a predetermined period (step S101), the dummy data is transmitted to the mobile communication terminal (step S102). Simultaneously, this data is recorded by the dealer (step S103).
Therefore, it is possible to secure the safety of the account with respect to even a customer carrying out the accounts in low frequency.

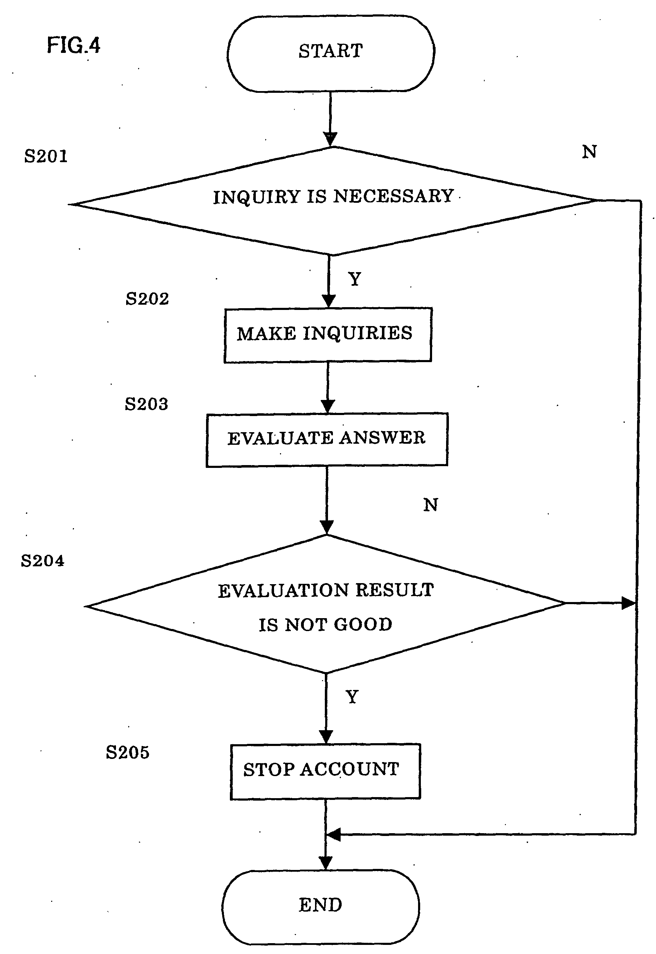

FIG. 4 illustrates the processing in the case that any malfunction may occur in the mobile communication terminal such as a theft of the mobile communication terminal.

In FIG. 4, if any malfunction is anticipated, the dealer judges that the inquiry is necessary (step S201) and a person in charge makes inquiries orally (step S202). This inquiry is related to the data for specifying a customer and its content is "birthday", "permanent address", "address", "telephone number", "customer number", "personal identification code" and others of the customer.

The dealer evaluates an answer with respect to this inquiry (step S203). Then, if the evaluation result is not good (step S204), the dealer stops the account (step S205).

Thus, to make a direct inquiry appropriately minimizes the risk of illegal usage of the mobile communication terminal.

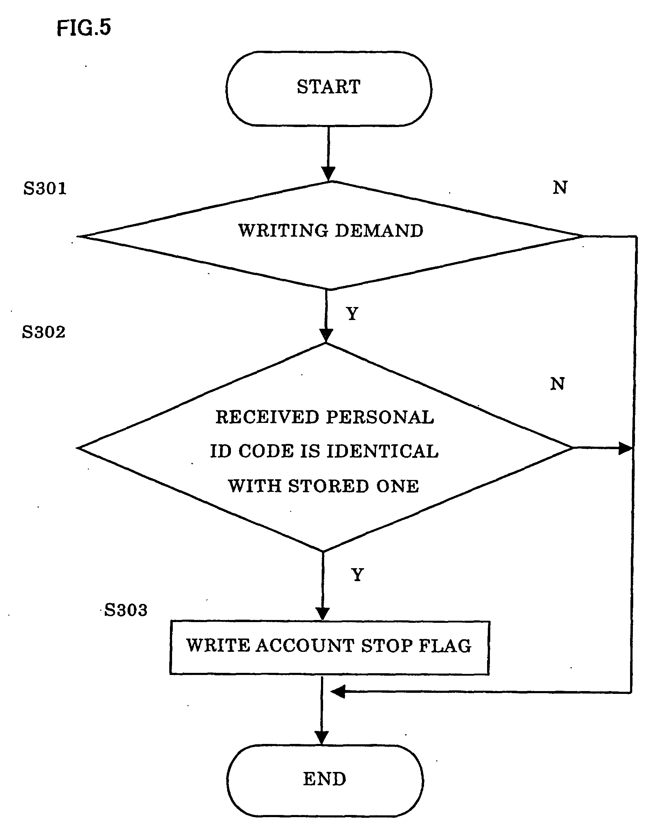

FIG. 5 illustrates the processing for stopping an account function by compulsion by a customer or a dealer.

In FIG. 5, an account stop personal identification code is stored in a memory of the mobile communication terminal. The customer or the dealer transmits the writing demand including this account stop personal identification code to the mobile communication terminal. If the mobile communication terminal receives the writing demand (step S301), it judges whether the received personal identification code is identical with the stored personal identification code or not (step S302). In this case, if the received personal identification code is identical with the stored personal identification code, an account stop flag is written in the memory (step S303) and all accounts by the use of the present mobile communication terminal are stopped. Hereby, the accounts with respect to other dealers are also stopped, so that it becomes possible to secure the safety of the present customer's accounts to the fullest extent.

In the next place, a customer collation system of a third embodiment according to the present invention will be explained with reference to the drawing.

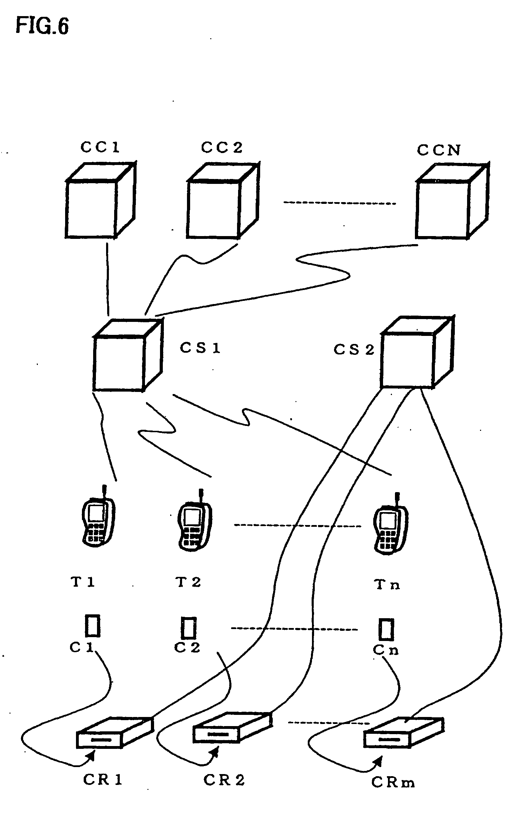

In FIG. 6, the customer collation system has a plurality of the mobile communication terminals T1 to Tn such as a mobile telephone, a PHS, a pager and others. These mobile communication terminals are capable of communicating with the dealers CC1 to CCN through the mobile communication service company CS1.

The mobile communication terminals T1 to Tn have built-in storage means such as a memory or the like (not illustrated) as well as detachable storage means such as the SIM cards C1 to Cn or the like. The memory and the SIM card hold the prepaid amount, the account information such as the balance and the collation codes shown in the table 1 and the table 2 in addition to a customer number, a personal identification code, an effective period, a limited amount of the usage in credit insurance companies and prepaid dealers (which are referred to "dealers") and others fixed data on the basis of a contract between the card issuer and a customer.

Storage contents of respective SIM cards C1 to Cn are capable of being read by the SIM card readers CR1 to CRm or the like. The reading result is transmitted to the dealers CC1 to CCN corresponding to this account through the communication service company CS2.

In the third embodiment, as same as the second embodiment, it is possible to perform the processing for writing the dummy data, the processing for the inquiry and the processing for stopping the account by compulsion.

### Industrial Applicability

As described above, according to the present invention, it is possible to prevent "the fraudulent usage of a card".

## Claims

1. A customer collation system comprising: storage means for storing the usage condition data resulting from the usage condition of a card of a customer; and collation means for collating the usage condition data from a shop with the usage condition data, which is stored in the storage means.

2. The customer collation system according to claim 1, wherein the card is a credit card and the usage condition data is the purchase data of the recent predetermined times.

3. The customer collation system according to claim 1, wherein the card is a cash card and the usage condition data is the purchase data of the recent predetermined times.

4. A card comprising storage means for storing the usage condition data resulting from the usage condition.

5. The card according to claim 4, wherein the card is a credit card and the usage condition data is the purchase data of the recent predetermined times.

6. The card according to claim 4, wherein the card is a cash card and the usage condition data is the account data of the recent predetermined times.

7. A customer collation system comprising: storage means for storing the account condition data resulting from the account condition of a mobile communication terminal of a customer; and collation means for collating the account condition data from the mobile communication terminal with the account condition data, which is stored in the storage means.

8. The customer collation system according to claim 7, wherein the account condition data comprises the credit account data or the prepaid account data of the recent predetermined times.

9. The customer collation system according to claim 7, wherein the customer collation system is provided with transmission means for transmitting the pseudo data of the account to the mobile communication terminal when the account has not been performed during a given period and the storage means stores the pseudo data of the account as the account condition data.

10. A mobile communication terminal comprising: storage means for storing the account condition data resulting from the account condition upon performing a transaction.

11. The mobile communication terminal according to claim 10, wherein the storage means stores an account stop personal identification code for stopping an account and is provided with controlling means for inputting the account stop personal identification code through the communication and whereby, stop an account by the mobile communication terminal.

12. A shop system which is capable of being detachably connected to a mobile communication terminal of a customer and is capable of connecting detachable storage means for storing a customer specific code and the account condition data resulting from the account condition upon performing a transaction by the mobile communication terminal, and said shop system comprising: reading means for reading out the code and the account condition data from the detachable storage means and for transmitting it to a dealer; and receiving means for receiving the information with regard to whether the dealer permits the account or not.

13. The shop system according to claim 12, wherein the detachable storage means is a SIM card.

14. A mobile communication terminal detachably connecting the detachable storage means for storing a customer specific code and the account condition data resulting from the account condition upon performing a transaction by the mobile communication terminal.

15. The mobile communication terminal according to claim 14, wherein the detachable storage means stores the account stop personal identification code for stopping an account and the detachable storage means is provided with controlling means for stopping the account due to the mobile communication terminal by inputting the account stop personal identification code through the communication.
